# FASCICULE DE BREVET EUROPEEN

(11) **EP 0 919 436 B1**
(45) Date de publication et mention de la délivrance du brevet: **23.04.2003**
(21) Numéro de dépôt: 98440162.0
(22) Date de dépôt: 28.07.1998
(51) Int. Cl.: B60R 16/00

(54) **Manette de commutation électrique, notamment de commande sous volant**
Unter dem Lenkrad angeordneter, elektrischer Steuerungsschalthebel
Electric control lever under the steering wheel

(30) Priorité: 28.11.1997 FR 9715192
(43) Date de publication de la demande: 02.06.1999
(73) Titulaire: EATON CORPORATION, Cleveland, Ohio 44114-2584 (US)
(72) Inventeur: Garin, Gilles, 67400 Illkirch (FR); Moreau, Fabien, 67115 Plobsheim (FR); Ullius, Henri, 67270 Schwindratzheim (FR); Zann, Olivier, 67130 Wackenbach (FR)
(74) Mandataire: Littolff, Denis

(56) Documents cités:
- EP-A- 0 763 447
- DE-A- 3 440 453
- DE-A- 4 206 335
- DE-A- 19 538 767
- DE-A- 19 706 546
- DE-C- 4 428 883
- FR-A- 2 745 944

## Description

La présente invention concerne une manette de commutation électrique de type levier, que l'on trouve notamment dans les véhicules automobiles pour ce qu'il est convenu d'appeler les commandes sous volant, conformément au préambule de la revendication.

Ce genre de manette est par exemple utilisé pour la commande combinée des feux principaux et des feux anti-brouillard du véhicule, et sont accessibles à l'automobiliste dans la zone périphérique médiane du volant. Du fait de l'existence de fonctions supplémentaires, telles que la possibilité de déclencher des appels de phares, les manettes de commande sous votant sont généralement pourvues de systèmes de liaisons mécaniques complexes avec le haut de colonne de direction, autorisant par exemple le pivotement suivant au moins deux axes distincts.

Dans la plupart des cas, les différents feux précités sont commandés à l'aide de bagues rotatives autour de l'axe principal du levier constituant le corps de la manette, lesdites bagues étant solidaires de lames de contact commutant des circuits situés à proximité de celles-ci.

L'information électrique résultant de la position des bagues, aussi bien que la variation d'information provenant d'une modification de position, doivent bien entendu être transmises au véhicule, notamment via un boîtier solidaire du haut de colonne dans lequel la manette est implantée.

Actuellement, les lames de contact coopèrent avec des circuits fixes par rapport à la manette, disposés en regard des éléments de commutation mobiles, et qui transmettent les informations liées à leurs changements d'état au moyen de fils classiques. En général, lesdits circuits fixes sont tracés sur des circuites imprimés rendus solidaires des manettes, comportant des pistes sur lesquelles frottent les lames de contact élastiques.

Les circuits imprimés sont électriquement reliés aux boîtiers solidaires des hauts de colonne par des faisceaux de plusieurs fils, chacun étant classiquement soudé à ses deux extrémités.

Cette configuration présente plusieurs inconvénients importants, à la fois sur le plan du fonctionnement de la manette proprement dite et sur le plan de sa fabrication.

Ainsi, la nécessité des soudures aux extrémités des conducteurs de liaison est à l'origine d'un manque de fiabilité à présent bien identifié, pouvant notamment apparaître au moment de la fabrication.

Cela est d'autant plus vrai que, pour une manette à deux organes de commande de type bague rotative, on arrive facilement à un total de six fils véhiculant l'information nécessaire, notamment parce que chaque bague peut comporter plus de deux positions stables qu'il faut refléter en terme d'information électrique. Chaque fil comportant deux soudures d'extrémité, le risque de problèmes au niveau des connexions s'accroît sensiblement. En outre, la fabrication du levier, impliquant douze soudures, est plus compliquée et par conséquent plus onéreuse.

La manette pouvant elle-même être soumise à des mouvements de pivotement, des contraintes mécaniques, certes mineures mais répétées, peuvent s'appliquer sur le faisceau.

Dans la configuration actuelle, les manettes sont par exemple dotées de deux bagues de commande comportant des lames de contact agissant sur au moins un circuit imprimé rigide, d'épaisseur donnée.

Le ou les circuits imprimés rigides comportent des pistes formant un circuit nécessairement plan d'où une interaction lame de contact / circuit qui se fait obligatoirement à plat et ne permet pas à cette partie d'exercer d'autres fonctions, mécanique ou électrique, qui nécessiteraient de rapporter des éléments supplémentaires au niveau desdits circuits imprimés rigides.

La manette de commande faisant l'objet de la présente invention s'affranchit des inconvénients précités, et propose une configuration technique à la fois extrêmement fiable et ouvrant des possibilités fonctionnelles additionnelles pour la manette. Cette dernière peut ainsi trouver des applications dans de multiples domaines.

D'une manière générale, il s'agit également d'une manette de commutation électrique de type levier, transmettant des informations de nature électrique à un boîtier central auquel la manette est reliée mécaniquement, comportant un corps principal présentant au moins un organe de commande solidaire d'une lame de contact destinée à commuter des contacts électriques sur un circuit solidaire de la manette, ledit circuit étant disposé sur un circuit imprimé flexible.

Le remplacement d'un ou plusieurs circuits imprimés rigides par un circuit imprimé flexible a des répercussions sur l'ensemble de la conception de la manette, comme cela se manifeste dans la suite de la description.

Il offre au surplus un certain nombre d'avantages non négligeables :
- il n'y a plus de fils électriques soudés à un circuit imprimé rigide ;
- les points de soudure, qui aggravent en général les problèmes de fiabilité, n'existent par conséquent plus ;
- le montage et la fabrication sont facilités et diminuent les coûts de production ;
- le gain volumique procuré par un ruban flexible par rapport à un faisceau de conducteurs accroît sensiblement le nombre de formes possibles pour le levier. En d'autres termes, l'esthétique peut plus s'affranchir des contraintes techniques qu'auparavant.

On connaît déjà les configurations de leviers de commande intégrant un circuit imprimé flexible. Ainsi, le document de brevet DE 195 38 767 A1 (état de la technique le plus proche) fait état d'une telle association, pour un levier doté d'un poussoir d'extrémité et d'un commutateur de commande coulissable dans la direction de l'axe du levier.

Les commutations d'état se font alors sur une face du circuit imprimé flexible, dans un même plan. Un certain nombre de leviers de commande actuels comportent cependant des bagues de commande rotatives. L'orientation de l'extrémité du circuit flexible peut alors difficilement être conservée axiale, comme c'est le cas dans la configuration présentée dans le document allemand.

La conception du levier doit, d'une manière générale, être revue pour s'adapter à ce qui constitue l'apport de la présente invention, à savoir le fait que l'un ou les organes de commande sont animés d'un mouvement de rotation par rapport à l'axe du corps principal de la manette.

On se rapproche ainsi des configurations notamment appliquées dans le domaine des commandes sous volant pour véhicules automobiles qui représentent l'une des applications les plus naturelles des leviers de l'invention, bien que non exclusive. Selon le cas, les manettes de commande comportent une ou deux bagues rotatives de commande.

Dans le cas de l'invention, et selon une caractéristique principale la manette comporte deux bagues de commandes rotatives, qui sont séparées par un support fixé au corps principal, les lames de contact solidaires desdites bagues de commande rotatives coopérant avec les pistes du circuit imprimé flexible du niveau dudit support fixe.

De plus, l'une des extrémités du circuit imprimé flexible, destinée à transmettre l'information dans le boîtier central, sort du corps principal au voisinage de sa liaison mécanique avec ledit boîtier.

De préférence, dans cette configuration, le circuit imprimé flexible comporte des pistes sur une seule face, et est replié de part et d'autre du support ou d'une bague fixe qui lui est solidaire, de manière à présenter deux surfaces perpendiculaires à l'axe de la manette, plaquées contre les faces correspondantes dudit support ou de ladite bague fixe, et orientées à l'opposé l'une de l'autre de même que les lames de contact rotatives avec lesquelles elles coopèrent.

Selon la complexité des commutations à réaliser, chaque organe de commande permet d'obtenir au moins deux positions de commutation distinctes, et est associé à un système d'indexage mécanique contrôlant le mouvement de passage dudit organe de commande d'une position de commutation à l'autre.

Dans le cas où la manette présente une forme de levier allongé, comme c'est souvent le cas notamment dans l'automobile, avec des organes de commande situés à l'opposé de l'extrémité comportant les moyens de liaison mécanique avec le boîtier central, le circuit imprimé flexible comporte une portion en forme de ruban allongé logée dans le corps principal de la manette, et reliant la zone de commutation audit boîtier central.

De préférence, l'extrémité du circuit imprimé flexible située dans ledit boîtier central sert elle-même de connecteur mâle. Cette configuration, qui économise des points de connexion supplémentaires, facilite en outre la fabrication du produit. Selon une alternative possible, un connecteur mâle est fixé en bout du circuit imprimé flexible.

Selon une possibilité, le support sur lequel est tracé le circuit imprimé flexible est réalisé en polyester souple. Le choix du matériau, ainsi que des paramètres géométriques du type épaisseur, largeur, etc... dépend de la configuration finale de l'ensemble de la manette, et de son intégration au boîtier central : ainsi, le mode de fixation du connecteur au ruban du circuit imprimé flexible a une influence sur le choix de l'épaisseur.

Le circuit imprimé flexible peut être collé sur le support rigide au niveau de la bague fixe disposée entre les deux bagues rotatives, lorsque cette dernière existe. Les deux bagues peuvent cependant également être jointives, le support fixé au levier sur lequel est collé le circuit flexible étant dans le corps même de la manette.

Les opérations successives de pliage et collage du circuit ont également des conséquences pratiques sur le choix du matériau et des caractéristiques géométriques, lesquelles sont également déterminées par la bague fixe ou le support qui lui est solidaire, dont la configuration et les fonctionnalités doivent être prises en compte.

En ce qui concerne la bague fixe et/ou le support, on notera encore qu'ils participent de manière importante à la souplesse d'utilisation et de conception de la manette de l'invention, car ils assurent indirectement les schémas de commutation des deux bagues de commande, et peuvent être configurés à façon pour assurer d'autres fonctions, par exemple en liaison avec un poussoir axial disposé en bout de la manette, comme on le verra dans la suite.

L'invention va à présent être décrite plus en détail, en référence aux figures annexées, pour lesquelles :
- la figure 1 est une vue en plan du circuit imprimé flexible ;
- la figure 2 montre une face du support sur lequel est collée l'une des extrémités dudit circuit imprimé flexible ;
- la figure 3 est une vue en perspective montrant ledit support inséré dans la bague fixe de la manette, ainsi qu'une lame de commutation coopérant avec le circuit imprimé ;
- la figure 4 représente une vue éclatée d'une manette selon l'invention, à deux bagues de commande dotées de systèmes d'indexation radiaux ; et
- la figure 5 montre une vue en perspective de l'extrémité de la même manette comportant les bagues de commandes, ces dernières étant figurées transparentes.

La description détaillée qui suit concerne un mode de conception possible d'une manette à double bague, qui n'est bien entendu pas limitatif de l'invention.

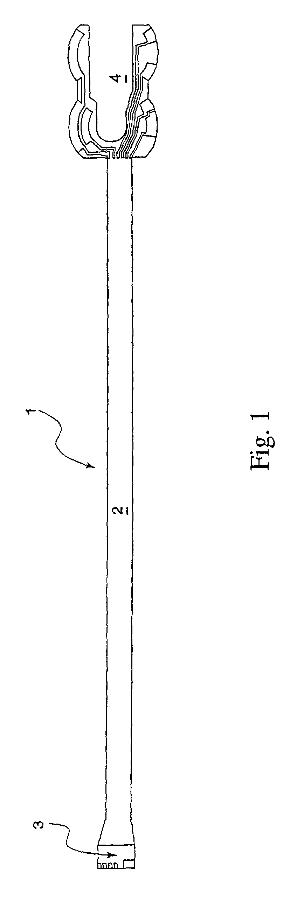

Le circuit imprimé flexible (1) apparaissant en figure 1 constitue un exemple de configuration bien entendu adapté aux éléments qui seront décrits en référence aux figures suivantes. L'ensemble n'est lui-même qu'un exemple particulier de manette qui ne peut être considéré comme limitatif de l'invention.

Ce circuit (1) comporte sensiblement trois portions : un ruban central (2), une extrémité faisant office de et/ou recevant le connecteur (3), une autre extrémité bifide (4) sur laquelle est tracée la partie la plus intéressante du circuit imprimé, celle sur laquelle ont lieu les commutations.

Il est, comme on l'a mentionné auparavant, réalisé en un matériau souple du type polyester sur lequel les piste conductrices sont imprimées selon un procédé classique.

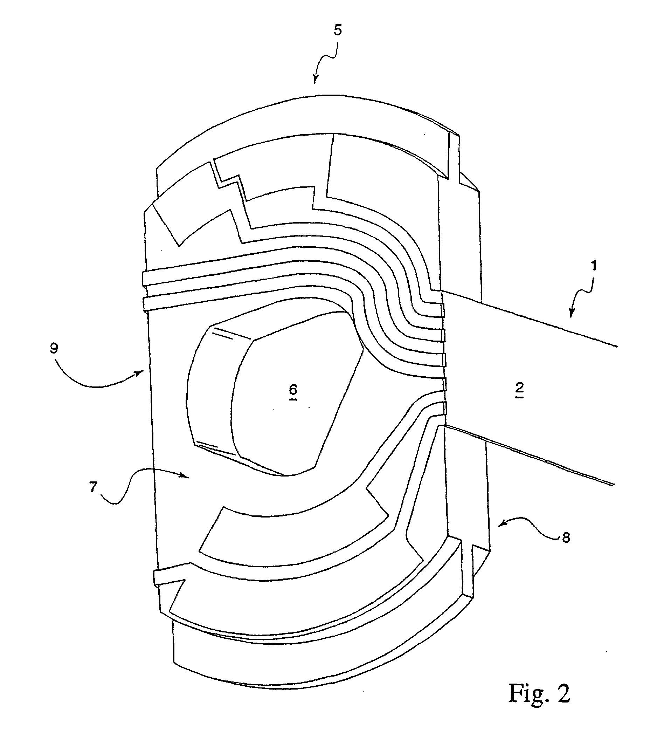

Pour que les pistes tracées sur la partie bifide (4) puissent assurer correctement leur fonction, il est nécessaire qu'elles soient rigidifiées pour que le contact avec les lames de commutation soit électriquement possible et pour garantir une pression de commutation uniforme. Ladite partie d'extrémité (4) est donc collée sur un support (5) apparaissant en figure 2. Ce dernier, doté d'un orifice central (6), sert de support au circuit (1) sur trois faces connexes (7, 8, 9), dont les deux faces de plus grande surface (7, 8) sont fonctionnellement actives en ce qui concerne la commutation.

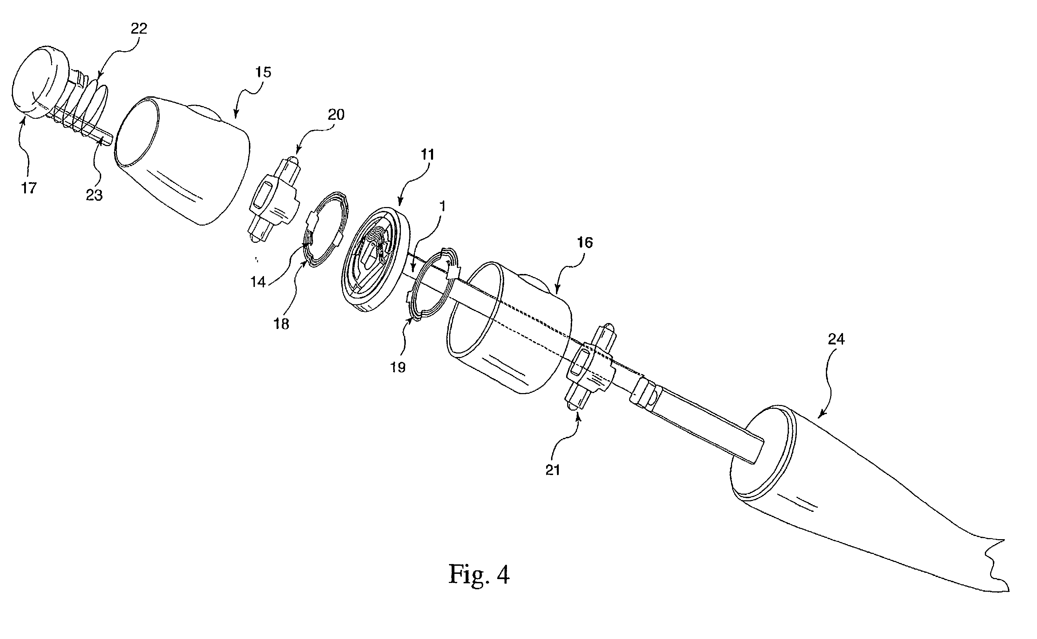

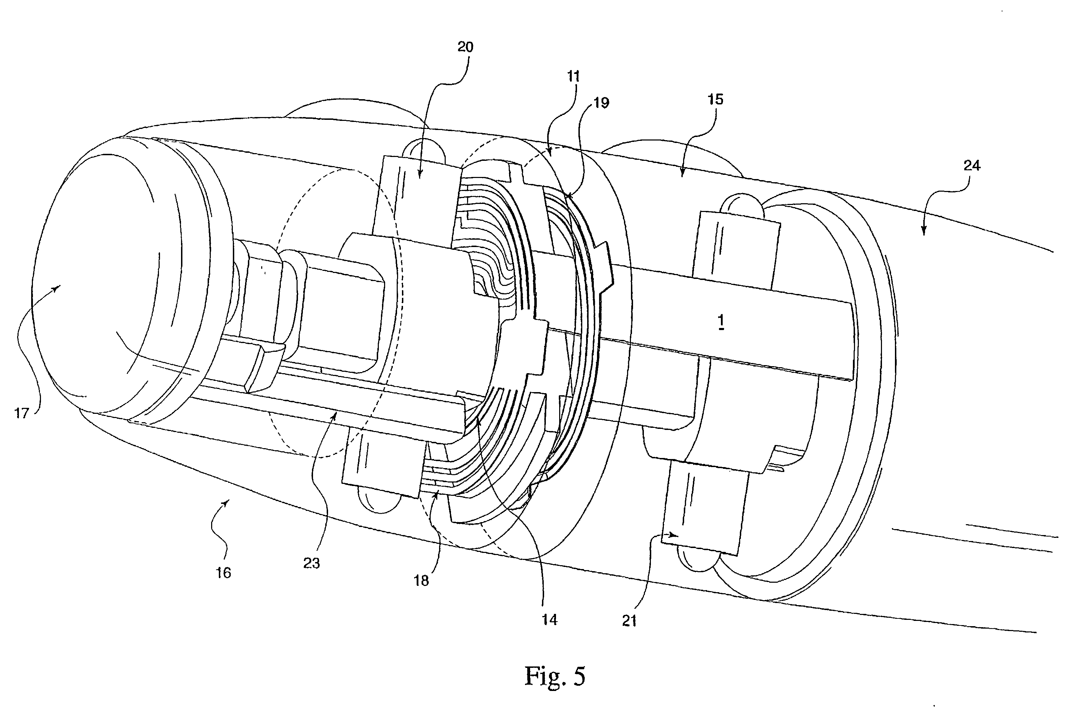

En réalité, ladite extrémité (4) est repliée suivant deux rainages transversaux, de telle sorte qu'elle recouvre sensiblement la totalité des trois surfaces précitées (7, 8, 9). Les deux faces (7, 8) assurent le schéma de commutation, en coopération avec les lames de contact solidaires des bagues de commande (voir figures 4 et 5). Le schéma électrique apparaissant sur la grande face (7) permet la réalisation des fonctions autorisées par la bague en regard (en réalité par la lame de contact correspondante) par modification des contacts.

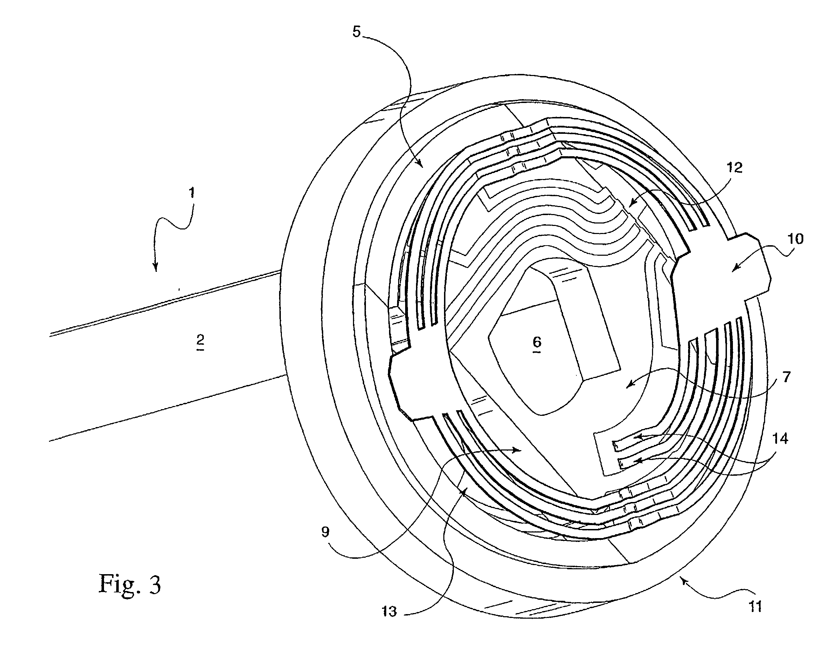

La figure 3 permet de mieux comprendre ceci, car ladite face (7) est montrée en phase de coopération avec une lame de contact (10), rotative par rapport au support (5) car elle est solidaire d'une bague de commande rotative. Ledit support (5) est figuré enfiché dans une bague (11) matérialisant une périphérie cylindrique qui trouvera sa place dans l'ensemble de la manette qui sera décrite ci-après. Des orifices latéraux (12, 13) subsistent entre le support (5) et la bague (11), permettant notamment le passage de la partie centrale (2) du circuit imprimé flexible (1).

La rotation de la lame de contact (10) s'effectue suivant une course d'environ 60-70° pendant laquelle des zones prévues à cet effet de ladite lame (10) commutent des contacts selon leur position relativement au circuit imprimé flexible (1). Les contacts se font par frottement et glissement d'une position à l'autre.

Chaque lame de contact (10) est de préférence réalisée en un alliage de cuivre revêtu d'argent, lui conférant les propriétés électriques de conduction et mécaniques de souplesse et de solidité appropriées.

Elle comporte au moins une patte (14) pouvant coopérer avec un doigt solidaire d'un poussoir (voir figure 5) situé en bout de manette, qui exerce une action axiale visant à mettre en contact le ou les pattes (14) et la piste située immédiatement en dessous.

Cela peut permettre de conférer une fonction supplémentaire à ladite manette, par établissement dudit contact à action axiale, comme par exemple le défilement des fonctions de l'ordinateur de bord, ou équivalent.

La figure 4 donne une image plus globale, bien qu'éclatée, d'un exemplaire de manette de l'invention dotée de deux bagues de commande (15, 16), et d'un poussoir d'extrémité (17). Chaque bague (15, 16) coopère d'une part avec une lame de contact (18,19) et d'autre part avec un composant d'indexation (20, 21) ou doigt d'indexage lui permettant de passer d'une position stable à l'autre.

La bague fixe (11) comportant le circuit imprimé flexible (1) reprend la configuration représentée en figure précédente, et ne nécessite pas d'explications supplémentaires.

Comme indiqué, un poussoir (17) coopérant avec un mécanisme de rappel symbolisé par le ressort (22) peut également agir sur le circuit imprimé flexible (1), notamment au moyen d'un doigt (23) exerçant une action sur les pattes (14) d'une des lames de contact (18).

Ces organes de commandes, ainsi que leurs composants associés, sont montés sur un corps principal ou levier (24) dont l'autre extrémité comporte les parties destinées à former les liaisons mécaniques avec le boîtier central (non représenté).

La figure 5 représente la partie de commande de la manette telle que montée, avec les deux bagues de commande (15, 16) montrées en transparence, de sorte que les interactions fonctionnelles des composants soient clairement établies.

Les composants (20, 21) sont des doigts d'indexage fonctionnant radialement, et il est à noter qu'une configuration avec des doigts d'indexage axiaux fonctionne sur le même principe, ceux-ci étant alors solidarisés à la bague fixe (11).

Cette dernière peut être fabriquée selon les contraintes fonctionnelles internes de la manette avec une souplesse bien plus grande que dans les configurations munies d'un circuit imprimé rigide, ce qu'illustre notamment cette possibilité de la coupler avec les doigts d'indexage.

La figure 5 montre en particulier l'interaction entre le doigt axial (23) et les pattes flexibles (14) de la lame de contact (18), solidaire de la bague (16).

Chaque mouvement imprimé à l'une des bagues mobiles (15, 16) provoque un déplacement équivalent pour les lames de contact (18, 19) qui leur sont solidaires : la commutation des contacts tracés sur le circuit imprimé flexible naît de ces déplacements contrôlés par l'utilisateur.

La souplesse de configuration autorisée par le couple bague fixe (11) /circuit imprimé flexible (1), permet d'imaginer de multiples solutions qui sont autant de variantes entrant dans le cadre de la présente invention. Ainsi, les deux bagues de commande (15, 16) peuvent être jointives ; la manette peut ne comporter qu'une seule bague, etc...

## Revendications

1. Manette de commutation électrique de type levier, transmettant des informations de nature électrique à un boîtier central auquel la manette est reliée mécaniquement, comportant un corps principal (24) présentant au moins un organe de commande (15, 16) solidaire d'une lame de contact (18, 19) destinée à commuter des contacts électriques sur un circuit solidaire de la manette, ledit circuit étant disposé sur un circuit imprimé flexible (1), et le ou les organes de commande (15, 16) étant animés d'un mouvement de rotation par rapport à l'axe du corps principal (24) de la manette, et une partie dudit circuit imprimé flexible (1) destiné à transmettre l'information au niveau du boîtier central, sortant du corps principal (24) an voisinage de sa liaison mécanique avec ledit boîtier
**caractérisée en ce qu'**elle comporte deux bagues de commandes rotatives (15, 16) séparées par un support (5) fixé au corps principal (24), les lames de contact (18, 19) solidaires desdites bagues de commande rotatives (15, 16) coopérant avec les pistes du circuit imprimé flexible (1) au niveau dudit support fixe (5).

2. Manette de commutation électrique selon la revendication précédente, **caractérisée en ce que** le circuit imprimé flexible (1) comporte des pistes sur une seule face, et est replié de part et d'autre du support (5) ou d'une bague fixe (11) qui lui est solidaire, de manière à présenter deux surfaces (7, 8) perpendiculaires à l'axe de la manette, plaquées contre les faces correspondantes dudit support (5) ou de ladite bague fixe (11), orientées à l'opposé l'une de l'autre de même que les lames de contact rotatives (18, 19) avec lesquelles elles coopèrent.

3. Manette de commutation électrique selon l'une des revendications précédentes, **caractérisée en ce que** chaque organe de commande (15, 16) permet d'obtenir au moins deux positions de commutation distinctes, et est associé à un système d'indexage mécanique (20, 21) contrôlant le mouvement de passage dudit organe de commands (15, 16) d'une position de commutation à l'autre.

4. Manette de commutation électrique selon l'une quelconque des revendications précédentes, **caractérisée en ce que** ladite manette présente une forme de levier allongé sur lequel le ou les organes de commande (15, 16) sont situés à l'opposé de l'extrémité comportant les moyens de liaison mécanique avec le boîtier central, le circuit imprimé flexible (1) comportant une portion (2) en forme de ruban allongé logée dans le corps principal (24) de la manette, et reliant la zone de commutation audit boîtier central.

5. Manette de commutation électrique selon l'une quelconque des revendications précédentes, **caractérisée en ce que** l'extrémité (3) du circuit imprimé flexible (1) située dans ledit boîtier central constitue un connecteur mâle.

6. Manette de commutation électrique selon la revendication 5, **caractérisée en ce que** l'extrémité (3) du circuit imprimé flexible (1) située dans ledit boîtier central est dotée d'un connecteur fixé sur ladite extrémité (3).

7. Manette de commutation électrique selon la revendication précédente, **caractérisée en ce que** le connecteur fixé en bout (3) du circuit imprimé flexible (1) est un connecteur mâle.

8. Manette de commutation électrique selon l'une quelconque des revendications 1 à 7, **caractérisée en ce que** le circuit imprimé flexible (1) est collé sur le support rigide (5) disposé entre les deux bagues rotatives (15, 16).

9. Manette de commutation électrique selon l'une quelconque des revendications précédentes, **caractérisée en ce que** le support sur lequel est tracé le circuit imprimé flexible (1) est réalisé en polyester souple.

## Patentansprüche

1. Elektrischer Schaltbedienungshebel zur Übertragung von Informationen elektrischer Art an einen zentralen Schaltkasten, mit welchem der Bedienungshebel mechanisch verbunden ist mit einem Hauptgehäuse bzw. -korpus (24), das/der wenigstens ein Steuerorgan (15, 16) aufweist, welches mit einer Kontaktscheibe bzw. -lamelle (18, 19) fest verbunden ist, die zur Umschaltung der elektrischen Kontakte auf einer mit dem Bedienungshebel fest verbundenen Schaltung bestimmt ist, wobei die genannte Schaltung auf einer flexiblen gedruckten Schaltung (1) angeordnet ist und das bzw. die Steuerorgan(e) (15, 16) durch eine Drehbewegung relativ bezüglich der Achse des Hauptkörpers (24) des Bedienungshebels betätigt wird/werden, und wobei ein zur Übertragung der Information an den zentralen Schaltkasten bestimmter Teil der flexiblen gedrückten Schaltung aus dem Hauptkörper (24) im Bereich benachbart von dessen mechanischer Verbindung mit dem Schaltkasten austritt,
**dadurch gekennzeichnet, daß** der Bedienungshebel zwei drehbare Steuerringe (15, 16) aufweist, die durch einen mit dem Haupt-Gehäusekörper (24) fest verbundenen Träger (5) voneinander getrennt sind, und daß die mit den genannten Steuerdrehringen (15, 16) festverbundenen Kontaktscheiben bzw.lamellen (18, 19) mit den Leiterbahnen der flexiblen gedruckten Schaltung (1) auf dem Niveau des genannten feststehenden Trägers (5) zusammenwirken.

2. Elektrischer Schaltbedienungshebel nach dem vorhergehenden Anspruch, **dadurch gekennzeichnet, daß** die flexible gedruckte Schaltung (1) nur auf einer Fläche Leiterbahnen aufweist und zu beiden Seiten des Trägers (5) oder eines mit diesem festverbundenen feststehenden Rings (11) umgefaltet bzw. umgebogen ist, derart daß sie zwei zur Achse des Bedienungshebels rechtwinklige Oberflächen (7, 8) aufweist, die plattenartig gegen die entsprechenden Seiten des Trägers (5) oder des genannten feststehenden Rings (11) anliegen, die einander entgegengesetzt gegenüberliegend angeordnet sind, ebenso wie die drehbaren Kontaktringe (18, 19), mit welchen sie zusammenwirken.

3. Elektrischer Schaltbedienungshebel nach einem der vorhergehenden Ansprüche, **dadurch gekennzeichnet, daß** jedes Steuerorgan (15, 16) jeweils wenigstens zwei distinkte, unterschiedliche Schaltstellungen einnehmen kann und jeweils einem mechanischen Indexiersystem (20, 21) zugeordnet ist, welches die Verstellbewegung des betreffenden Steuerorgana (15, 16) aus einer Schaltstellung in die andere kontrolliert.

4. Elektrischer Schaltbedienungshebel nach einem der vorhergehenden Ansprüche, **dadurch gekennzeichnet, daß** der Bedienungshebel die Form eines länglichen Hebels aufweist, auf welchem das bzw. die Steuerorgan bzw. -organe (15, 16) an dem entgegengesetzten Ende von dem Ende, welches die Mittel zur mechanischen Verbindung mit dem zentralen Schaltkasten aufweist, angeordnet ist/sind, und daß die flexible gedruckte Schaltung (1) ein Teil in Form eines länglichen Bandes aufweist, das in dem Hauptkörper bzw. Hauptgehäuse (24) des Bedienungshebels untergebracht ist und die Schaltzone mit dem zentralen Schaltkasten verbindet.

5. Elektrischer Schaltbedienungshebel nach einem der vorhergehenden Ansprüche, **dadurch gekennzeichnet, daß** das in dem zentralen Schaltkasten gelegene Ende (3) der flexiblen gedruckten Schaltung (1) ein Steckerteil darstellt.

6. Elektrischer Schaltbedienungshebel nach Anspruch 5,
**dadurch gekennzeichnet, daß** das in dem zentralen Schaltkasten gelegene Ende (3) der flexiblen gedruckten Schaltung (1) mit einem an diesen Ende (3) befestigten Leitungsverbinder versehen ist.

7. Elektrischer Schaltbedienungshebel nach dem vorhergehenden Anspruch, **dadurch gekennzeichnet, daß** der an dem Ende (3) der flexiblen gedruckten Schaltung (1) befestigte Leitungsverbinder ein Stecker ist.

8. Elektrischer Schaltbedienungshebel nach einem der Ansprüche 1 bis 7, **dadurch gekennzeichnet, daß** die flexible gedruckte Schaltung (1) mit dem zwischen den beiden Drehringen (15, 16) angeordneten starren Träger (5) verklebt ist.

9. Elektrischer Schaltbedienungshebel nach einem der vorhergehenden Ansprüche, **dadurch gekennzeichnet, daß** der Träger, auf welchem die flexible gedruckte Schaltung ausgelegt ist, aus einem biegsamen Polyestermaterial hergestellt ist.

## Claims

1. Electric switching knob of the lever type, transmitting information of an electrical nature to a central unit to which the knob is mechanically connected, comprising a main body (24) having at least one control member (15, 16) secured to a contact blade (18, 19) intended to switch electrical contacts on a circuit secured to the knob, the said circuit being arranged on a flexible printed circuit (1) and the control member or members (15, 16) being given a rotational movement with respect to the axis of the main body (24) of the knob, and a part of the said flexible printed circuit (1) intended to transmit the information at the level of the central unit leaving the main body (24) in the vicinity of its mechanical connection with the said unit, **characterized in that** it comprises two rotary control rings (15, 16) separated by a support (5) fixed to the main body (24), the contact blades (18, 19) secured to the said rotary control rings (15, 16) collaborating with the tracks of the flexible printed circuit (1) at the level of the said fixed support (5).

2. Electric switching knob according to the preceding claim, **characterized in that** the flexible printed circuit (1) comprises tracks on just one side, and is folded on each side of the support (5) or of a fixed ring (11) secured to it, so as to exhibit two surfaces (7, 8) perpendicular to the axis of the knob, the surfaces being pressed against the corresponding faces of the said support (5) or of the said fixed ring (11), oriented away from one another just like the rotary contact blades (18, 19) with which they collaborate.

3. Electric switching knob according to one of the preceding claims, **characterized in that** each control member (15, 16) makes it possible to obtain at least two distinct switching positions and is associated with a mechanical indexing system (20, 21) controlling the movement involved in switching the said control member (15, 16) from one switching position to the other.

4. Electric switching knob according to any one of the preceding claims, **characterized in that** the said knob has the shape of an elongate lever on which the control member or members (15, 16) are situated at the opposite end to the end comprising the means of mechanical connection with the central unit, the flexible printed circuit (1) comprising a portion (2) in the form of an elongate strip held in the main body (24) of the knob and connecting the switching region to the said central unit.

5. Electric switching knob according to any one of the preceding claims, **characterized in that** the end (3) of the flexible printed circuit (1) which end is situated inside the said central unit constitutes a male connector.

6. Electric switching knob according to Claim 5, **characterized in that** the end (3) of the flexible printed circuit (1) which end is situated inside the said central unit is provided with a connector fixed to the said end (3).

7. Electric switching knob according to the preceding claim, **characterized in that** the connector fixed at the end (3) of the flexible printed circuit (1) is a male connector.

8. Electric switching knob according to any one of Claims 1 to 7, **characterized in that** the flexible printed circuit (1) is bonded onto the rigid support (5) arranged between the two rotary rings (15, 16).

9. Electric switching knob according to any one of the preceding claims, **characterized in that** the support on which the flexible printed circuit (1) is designed is made of flexible polyester.
